# EUROPÄISCHE PATENTSCHRIFT

(11) **EP 0 955 451 B1**
(45) Veröffentlichungstag und Bekanntmachung des Hinweises auf die Patenterteilung: **08.10.2003**
(21) Anmeldenummer: 99105881.9
(22) Anmeldetag: 24.03.1999
(51) Int. Cl.: F01L 1/348

(54) **Vorrichtung zum Verstellen der relativen Drehlage von Nockenwellen**
Device for adjusting the angular phase of camshafts
Dispositif pour ajuster la phase angulaire d'arbres à cames

(30) Priorität: 08.05.1998 DE 19820534
(43) Veröffentlichungstag der Anmeldung: 10.11.1999
(73) Patentinhaber: Dr.Ing. h.c.F. Porsche Aktiengesellschaft, 70435 Stuttgart (DE); HYDRAULIK-RING GMBH, 72622 Nürtingen (DE)
(72) Erfinder: Stephan, Wolfgang, 73087 Boll (DE); Trzmiel, Alfred, 72661 Grafenberg (DE); Sluka, Gerold, 72622 Nürtingen (DE)

(56) Entgegenhaltungen:
- DE-A- 4 041 785
- DE-A- 19 541 769
- US-A- 5 366 415
- US-A- 5 542 383

## Beschreibung

Die Erfindung betrifft eine Vorrichtung zum Verstellen der relativen Drehlage von Nockenwellen einer Brennkraftmaschine nach dem Oberbegriff des Patentanspruchs 1.

Die EP 0 445 356 B1 behandelt eine Vorrichtung zum Verstellen der relativen Drehlage von zwei in einem Zylinderkopf einer Brennkraftmaschine angeordneten Nockenwellen. Durch die Verstellvorgänge wird eine Änderung der Ventilsteuerzeiten herbeigeführt. Besagte Vorrichtung hat sich in der Praxis bewährt - Sonderdruck aus ATZ Automobiltechnische Zeitschrift 93 (1991), Heft 10 und MTZ Motortechnische Zeitschrift 52 (1991), Heft 12 - insbesondere weil sich neben teleologischer Beeinflußung der Brennkraftmaschinen-Steuerzeiten ihre Integration in einen Ketten-Sekundärtrieb leicht bewerkstelligen läßt, und ihre Komponenten bei guter Funktion einfach sind.

Eine vergleichbare Vorrichtung geht aus der DE 40 41 785 A1 hervor, die ebenfalls in einen Kettentrieb zwischen zwei Nockenwellen einsetzbar ist.

Beide Vorrichtungen umfassen ineinandergesetzte Kolben und arbeiten hydraulisch, wobei sie bei stehender Brennkraftmaschine drucklos sind. Beim Starten der jeweiligen Brennkraftmaschine kann daher durch die Belastung des einen Kolbens über das Lasttrum der Kette eine plötzliche Verstellkraft auf den Verstellmechanismus - Anschlag Früh- oder Spätstellung - ausgeübt werden, die metallische Geräusche in der Vorrichtung verursacht

Aufgabe der Erfindung ist es daher, an der Vorrichtung solche Vorkehrungen zu treffen, durch die eine unerwünschte Verstellvorgang bei der Inbetriebnahme der Brennkraftmaschine verhindert wird.

Erfindungsgemäß wird diese Aufgabe durch die Merkmale des Patentanspruchs 1 gelöst.

Weitere, die Erfindung ausgestaltenden Merkmale sind in den nachfolgenden Ansprüchen enthalten.

Die mit der Erfindung hauptsächlich erzielten Vorteile sind darin zu sehen, daß die Verriegelungseinrichtung auf den Stellmechanismus der Vorrichtung während der Inbetriebnahme, insbesondere Kaltstart, der Brennkraftmaschine derart einwirkt, daß eine Verstellung der Vorrichtung ausgeschlossen ist. Dadurch ist sichergestellt, daß die Vorrichtung bis ca. 3 Sekunden nach dem Anlaßvorgang bzw. der Inbetriebnahme der Brennkraftmaschine in einer vorgesehenen Grundstellung verbleibt Dadurch werden unerwünschte Anschlaggeräusche des äußeren Hydraulikkolbens verhindert, wenn das noch drucklose System über das Ketten-Lasttrum diesen äußeren Hydraulikkolben aus einer ersten Endlage in eine zweite Endlage zu bewegen sucht. Sobald der Hydraulikdruck aufgebaut ist, wird der Sperrkolben der Verriegelungseinrichtung entriegelt und der Verstellmechanismus bzw. äußere Hydraulikkolben arbeitet entsprechend den vorgegebenen Schaltpunkten, d.h. in Abhängigkeit von Parametern der Brennkraftmaschine - Drehzahl und Last (= Gaspedalstellung)-.

Die Anordnung und Ausbildung des Sperrkolbens ist konstruktiv übersichtlich gestaltet, was nicht nicht nur eine gute Funktion der Verriegelungseinrichtung gewährleistet, sondern auch leicht herstellbare Bauteile schafft. Hervorzuheben ist ferner das sichere Zusammenwirken des Sperrkolbens mit dem Federelement und dem Hydraulikmedium; ebenso der geringe Raumanspruch.

In der Zeichnung ist ein Ausführungsbeispiel der Erfindung gezeigt, das nachstehend näher beschrieben ist.

Es zeigen:

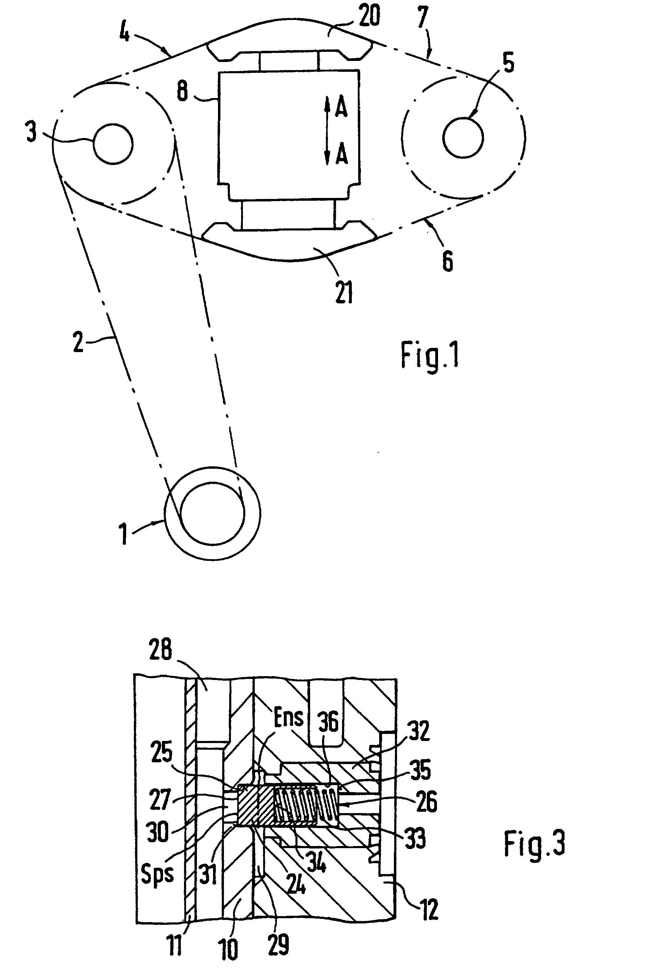

- Fig. 1: Eine schematische Darstellung einer Vorrichtung zum Verstellen der relativen Drehlage von Nockenwellen einer Brennkraftmaschine,

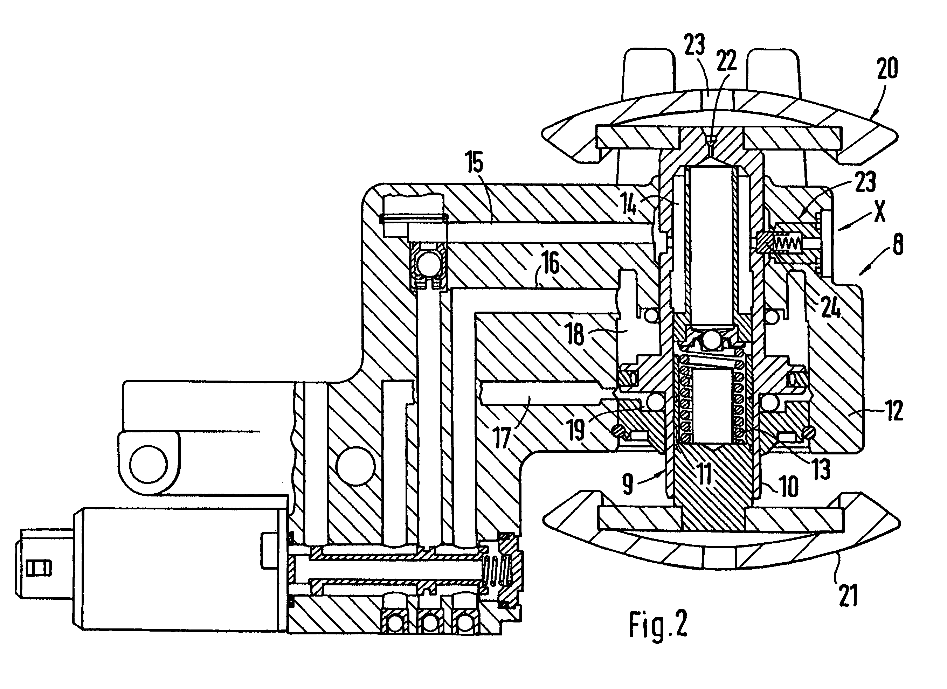

- Fig. 2: einen Schnitt durch die Vorrichtung gem. Fig. 1,
- Fig. 3: eine Einzelheit X der Fig. 2 in größerem Maßstab.

Von einer Kurbelwelle 1 einer nicht näher gezeigten Brennkraftmaschine ist mit einem Umschlingungstrieb 2 eine erste Auslaßventile betätigende Nockenwelle 3 - Auslaßnockenwelle - angetrieben. Die erste Nockenwelle 3 treibt mit einem eine Kettte 4 umfassenden Umschlingungstrieb eine zweite Einlaßventile betätigende Nockenwelle 5 - Einlaßnockenwelle - an. Zwischen einem Lasttrum 6 und einem Lostrum 7 der Kette 4 ist eine Vorrichtung 8 zum Verstellen der relativen Drehlage der beiden Nockenwellen 3 und 5 zueinander vorgesehen.

Die Vorrichtung 8 umfaßt eine Spannvorrichtung 9, die aus einem äußeren Hydraulikkolben 10 und einem in ihm längsgeführten inneren, ebenfalls hohlen Hydraulikkolben 11 besteht. Beide Kolben sind in einem Gehäuse 12 untergebracht, wobei zwischen besagtem Kolben eine Schrauben-Druckfeder 13 angeordnet ist. Die Spannvorrichtung 9 wird zum Verstellen der relativen Drehlage der zweiten Nockenwelle 3 quer - Richtung A-A - zur Kette 4 verschoben, dergestalt, daß das Lostrum 7 der Kette 4 verlängert und das Lasttrum 6 verkürzt oder das Lostrum 7 verkürzt und das Lasttrum 6 verlängert wird.

Der innere Hydraulikkolben 11 ist mit einem Druckraum 14 an eine erste Druckleitung 15 angeschlossen, wogegen der äußere Hydraulikkolben 10 an eine zweite Druckleitung 16 und eine dritte Druckleitung 17 angeschlossen ist, die mit Druckräumen 18,19 verbunden sind. Über die Druckräume 18,19 ist der äußere Hydraulikkolben 10 wechselweise mit Hydraulikmedium beaufschlagbar.

Außerdem sind die Hydraulikkolben 10,11 an ihren Enden mit Gleitschienen 20, 21 aus Kunststoff versehen, über die die Kette 4 läuft.

An der Oberseite des äußeren Hydraulikkolbens 10 ist eine Spritzbohrung 22 vorgesehen, über die Hydraulikmedium austritt. Dieses Hydraulikmedium durchdringt eine Öffnung 23 in der Gleitschiene 20 und wirkt als Schmiermittel zwischen einer Gleitfläche der Gleitschiene 20 und der Kette 4. Außerdem entweicht durch die Spritzbohrung 22 auf einfache Weise Luft, wenn beim Anlaßvorgang der Brennkraftmaschine der Druck des Hydraulikmediums aufgebaut wird.

Die Vorrichtung 8 arbeitet mit einer Verriegelungseinrichtung 23 zusammen, die den Stellmechanismus, gebildet durch den äußeren Hydraulikkolben 10 vor dem Anlassen bzw. bis kurz nach Inbetriebnahme der Brennkraftmaschine lagemäßig festlegt. Die Verriegelungseinrichtung 23 sperrt den äußeren Hydraulikkolben 10 und wird hydraulisch betätigt. Hierzu ist ein Sperrkolben 24 vorgesehen, der in radialer Richtung zum äußeren Hydraulikkolben 10 verläuft und mit einer zylindrischen Ausnehmung 25 des letzteren zusammenarbeitet. Der Sperrkolben 24 ist einerseits vom Hydraulikmedium der Spannvorrichtung 9 beaufschlagbar und wird andererseits mittels eines Federelements 26 in einer Sperrstellung Sps gehalten. Eine freie Seite 27 des Sperrkolbens 24 ist an einen ersten Hyraulikraum 28 angeschlossen, der zwischen dem inneren Hydraulikkolben 10 und dem äußeren Hydraulikkolben 11 vorgesehen ist. Außerdem ist die freie Seite 27 des Sperrkolbens 24 zwischen dem äußeren Hydraulikkolben 11 und dem Gehäuse 12 von einem zweiten Hydraulikraum 29 umgeben. Beide Hydraulikräume 28 und 29 sind über eine Öffnung 30 miteinander verbunden. Die Öffnung 30 ist in einem Wandabschnitt 31 vorgesehen, der die Ausnehmung 25 begrenzt und als Anschlag für den Sperrkolben 24 in der Sperrstellung Sps dient.

Der Sperrkolben 24 ist in einem Lagerteil 32 untergebracht, das in das Gehäuse 12 eingesetzt ist. Dieses Lagerteil 32 nimmt auch das Federelement 26 auf, das den Kolben 24 aus einer Entriegelstellung Ens in die Sperrstellung Sps zu bewegen sucht. Dieses Federelement 26 ist eine Druckfeder 33, die sich einerseits an einer Einbohrungswand 34 des Sperrkolbens und andererseits an einem Anschlag 35 des Lagerteils 32 abstützt. Der Anschlag 35 begrenzt eine Bohrung 36 für den Sperrkolben 24.

Vor dem Anlaßvorgang der Brennkraftmaschine nimmt der Sperrkolben 24 die Sperrstellung Sps ein. Der äußere Hydraulikkolben 10 ist lagemäßig festgelegt. Bei Inbetriebnahme der Brennkraftmaschine füllt sich der Hydraulikraum 28 und es wird Hydraulikdruck aufgebaut, der die freie Seite 27 des Sperrkolbens 24 beaufschlägt und ihn nach ca. 3 Sekunden gegen die Wirkung der Druckfeder 33 in die Entriegelstellung Ens bewegt. In dieser Entriegelstellung Ens sind Stellbewegungen des äußeren Hydraulikkolbens 10 zum Verstellen der relativen Drehlage der Nockenwellen 3,5 bewerkstelligbar.

## Patentansprüche

1. Vorrichtung (8) zum Verstellen der relativen Drehlage von Nockenwellen (3,5) zueinander, die in einer Brennkraftmaschine zur Betätigung von Ventilen drehbar gelagert sind, wobei die Vorrichtung (8) als ein eine spann- und verstellbare Kette (4) umfassender Umschlingungstrieb ausgebildet ist, mit dem die eine Nockenwelle (3) der Brennkraftmaschine die andere Nockenwelle (5) antreibt, wobei durch Verstellen der Kette (4) mit einer quer zur Kette wirkenden Spannvorrichtung (9) die relative Drehlage der Nockenwellen (3, 5) zueinander geändert wird, wobei die Spannvorrichtung (9) zum Verstellen der Kette (4) quer zur letzteren verschoben wird, dergestalt, dass das Lostrum (7) der Kette (4) verlängert und das Lasttrum (6) verkürzt oder das Lostrum (7) verkürzt und das Lasttrum (6) verlängert wird, und wobei die Spannvorrichtung (9) hydraulisch betätigt ist und aus einem hohlen äußeren Hydraulikkolben (10) und einem in diesem längsgeführten inneren, ebenfalls hohlen Hydraulikkolben (11) und aus einer in dem Hohlraum zwischen den beiden Hydraulikkolben (10, 11) verspannten Schrauben - Druckfeder (13) - besteht, **dadurch gekennzeichnet, dass** die Vorrichtung (8) mit einer Verriegelungsvorrichtung (23) zusammenarbeitet, die den äußeren Hydraulikkolben (10) vor dem Anlassen bzw. kurz nach der Betriebsaufnahme der Brennkraftmaschine lagemäßig festlegt, dass die Verriegelungseinrichtung (23) hydraulisch und mechanisch betätigbar ist und dass die Verriegelungsvorrichtung (23) einen Sperrkolben (24) umfasst, der radial zum äußeren Hydraulikkolben (10) angeordnet ist und mit einer als Aufnahme ausgebildeten Ausnehmung (25) im äußeren Hydraulikkolben (10) zusammenarbeitet.

2. Vorrichtung nach Anspruch 1, **dadurch gekennzeichnet, dass** der Sperrkolben (24) einerseits vom Hydraulikmedium der Spannvorrichtung (9) beaufschlagbar ist und andererseits mittels eines Federelements (26) in einer Sperrstellung (Sps) gehalten wird.

3. Vorrichtung nach einem der vorangehenden Ansprüche, **dadurch gekennzeichnet, dass** eine freie Seite (27) des Sperrkolbens (24) von einem ersten Hydraulikraum (28) zwischen dem äußeren Hydraulikkolben (10) und dem inneren Hydraulikkolben (11) mit Hydraulikmedium beaufschlagt wird.

4. Vorrichtung nach Anspruch 3, **dadurch gekennzeichnet, dass** die freie Seite (27) des Sperrkolbens (24) von einem zweiten Hydraulikraum (29) umgeben ist, der mit dem ersten Hydraulikraum (28) über eine Öffnung (30) in Verbindung steht.

5. Vorrichtung nach Anspruch 4, **dadurch gekennzeichnet, dass** die Öffnung (30) in einem die Ausnehmung (25) begrenzenden Wandabschnitt (31) des äußeren Hydraulikkolbens (10) vorgesehen ist.

6. Vorrichtung nach einem der vorangehenden Ansprüche, wobei die Vorrichtung in einem Gehäuse (12) gehalten wird, **dadurch gekennzeichnet, dass** der Sperrkolben (24) in einem in das Gehäuse (12) eingesetzten Lagerteil (32) angeordnet ist

7. Vorrichtung nach Anspruch 6, **dadurch gekennzeichnet, dass** das den Sperrkolben (24) aus einer Entriegelungsstellung (Ens) in eine Sperrstellung (Sps) zu bewegen suchende Federelement (26) eine Druckfeder (33) ist, die sich einerseits an einer Einbohrungswand (34) des Sperrkolbens (24) und andererseits an einem Anschlag (35) des Lagerteils (32) abstützt.

## Claims

1. A device (8) for adjusting the rotational position of camshafts (3, 5) relative to each other, which are mounted in a rotatable manner in an internal-combustion engine in order to actuate valves, wherein the device (8) is constructed in the form of a wrap-around contact drive which comprises a chain (4) capable of being tensioned and adjusted and by which one camshaft (3) of the internal-combustion engine drives the other camshaft (5), wherein the rotational position of the camshafts (3, 5) relative to each other is altered by the adjustment of the chain (4) by a tensioning device (9) acting transversely to the chain, wherein the tensioning device (9) is displaced transversely to the chain (4) in order to adjust the latter, in such a way that the slack run (7) of the chain (4) is lengthened and the loaded run (6) is shortened or the slack run (7) is shortened and the loaded run (6) is lengthened, and wherein the tensioning device (9) is actuated hydraulically and comprises a hollow outer hydraulic piston (10) and an inner, likewise hollow hydraulic piston (11)-guided longitudinally in the latter - and a helical compression spring (13) tensioned in the cavity between the two hydraulic pistons (10, 11) **characterized in that** the device (8) co-operates with a locking device (23) which fixes the outer hydraulic piston (10) in its position before the internal-combustion engine is started up or shortly after it comes into operation, the locking device (23) can be actuated hydraulically and mechanically and the locking device (23) comprises a locking piston (24) which is arranged radially with respect to the outer hydraulic piston (10) and co-operates with a recess (25) constructed in the form of a receiving means in the outer hydraulic piston (10).

2. A device according to Claim 1, **characterized in that** the locking piston (24) can be acted upon by the hydraulic medium of the tensioning device (9) at one end and is held in a locked position (**S**_{**ps**}) by means of a spring member (26) at the other end.

3. A device according to one of the preceding Claims, **characterized in that** a free end (27) of the locking piston (24) is acted upon with hydraulic medium by a first hydraulic space (28) between the outer hydraulic piston (10) and the inner hydraulic piston (11).

4. A device according to Claim 3, **characterized in that** the free end (27) of the locking piston (24) is surrounded by a second hydraulic space (29) which is connected to the first hydraulic space (28) by way of an opening (30).

5. A device according to Claim 4, **characterized in that** the opening (30) is provided in a wall portion (31) - bounding the recess (25) - of the outer hydraulic piston (10).

6. A device according to one of the preceding Claims, wherein the device is held in a housing (12), **characterized in that** the locking piston (24) is arranged in a bearing part (32) inserted in the housing (12).

7. A device according to Claim 6, **characterized in that** the spring member (26), which seeks to move the locking piston (24) from an unlocked position **(Ens**) into a locked position (**S**_{**ps**}), is a compression spring (33) which is supported on a wall (34) of a bore in the locking piston (24) at one end and on a stop (35) on the bearing part (32) at the other end.

## Revendications

1. Dispositif (8) pour régler la position de rotation relative d'arbres à cames (3, 5) l'un par rapport à l'autre, lesquels sont montés tournants dans un moteur à combustion interne, pour actionner des soupapes, le dispositif (8) étant réalisé sous la forme d'un mécanisme à enroulement comprenant une chaîne (4) réglable et pouvant être tendue, au moyen duquel un arbre à cames (3) du moteur à combustion interne entraîne l'autre arbre à cames (5), la position de rotation relative des arbres à cames (3, 5) étant modifiée par réglage de la chaîne (4) au moyen d'un dispositif de tension (9) agissant transversalement à la chaîne, le dispositif de tension (9) pour le réglage de la chaîne (4) étant déplacé transversalement à cette dernière de manière que le brin libre (7) de la chaîne (4) soit allongé et le brin de charge (6) raccourci ou le brin libre (7) raccourci et le brin de charge (6) allongé, et le dispositif de serrage (9) étant actionné hydrauliquement, et étant constitué d'un piston hydraulique extérieur (10) creux et d'un piston hydraulique intérieur (11) également creux, guidé longitudinalement dans le premier, ainsi que d'un ressort de pression hélicoïdal (13) tendu dans la cavité entre les deux pistons hydrauliques (10, 11), **caractérisé en ce que** le dispositif (8) coopère avec un dispositif de verrouillage (23) qui fixe en position correcte le piston hydraulique extérieur (10) avant le démarrage ou juste après la mise en service du moteur à combustion interne, **en ce que** le dispositif de verrouillage (23) peut être actionné hydrauliquement et mécaniquement et **en ce que** le dispositif de verrouillage (23) comprend un piston de blocage (24) qui est disposé radialement par rapport au piston hydraulique extérieur (10) et qui coopère avec un évidement (25), réalisé en tant que logement, dans le piston hydraulique extérieur (10).

2. Dispositif selon la revendication 1, **caractérisé en ce que** le piston de blocage (24) peut être sollicité d'une part par le fluide hydraulique du dispositif de serrage (9) et est maintenu d'autre part dans une position de blocage (Sps) au moyen d'un élément à ressort (26).

3. Dispositif selon l'une des revendications précédentes, **caractérisé en ce qu'**une face libre (27) du piston de blocage (24) est soumise aux effets de fluide hydraulique depuis une première chambre hydraulique (28) entre le piston hydraulique extérieur (10) et le piston hydraulique intérieur (11).

4. Dispositif selon la revendication 3, **caractérisé en ce que** la face libre (27) du piston de blocage (24) est entourée par une deuxième chambre hydraulique (29) qui communique avec la première chambre hydraulique (28) par une ouverture (30).

5. Dispositif selon la revendication 4, **caractérisé en ce que** l'ouverture (30) est prévue dans une portion de paroi (31) délimitant l'évidement (25) du piston hydraulique extérieur (10).

6. Dispositif selon l'une des revendications précédentes, le dispositif étant maintenu dans un boîtier (12), **caractérisé en ce que** le piston de blocage(24) est disposé dans un élément de palier (32) inséré dans le boîtier (12).

7. Dispositif selon la revendication 6, **caractérisé en ce que** l'élément à ressort (26) tendant à déplacer le piston de blocage (24) d'une position de déverrouillage (Ens) dans une position de blocage (Sps), est un ressort de pression (33) qui prend appui d'une part contre une paroi à percer (34) du piston de blocage (24) et d'autre part contre une butée (35) de l'élément de palier (32).
